# EUROPEAN PATENT SPECIFICATION

(11) **EP 0 972 080 B1**
(45) Date of publication and mention of the grant of the patent: **23.03.2005**
(21) Application number: 98913175.0
(22) Date of filing: 23.03.1998
(51) Int. Cl.: C12Q 1/68

(54) **BIOMOLECULAR PROCESSOR**
BIOMOLEKULARER PROZESSOR
PROCESSEUR BIOMOLECULAIRE

(30) Priority: 24.03.1997 US 41237 P
(43) Date of publication of application: 19.01.2000
(73) Proprietor: Fields, Robert E., Menlo Park, CA 94025 (US)
(72) Inventor: Fields, Robert E., Menlo Park, CA 94025 (US)
(74) Representative: Nash, Keith Wilfrid
(86) International application number: PCT/US1998/006029
(87) International publication number: WO 1998/042874

(56) References cited:
- EP-A- 0 487 028
- WO-A-97/32645
- US-A- 4 775 635
- US-A- 5 645 723

## Description

### Field of the Invention

The invention relates to laboratory and clinical instruments, procedures for isolation and purification of target molecules from biological fluids, and apparatus for combining target molecules with other components of an assay mixture.

### Background of the Invention

In the United States more than 500 thousand people per year die from sepsis, an often-fatal complication following surgery, which requires identification of a bacterial strain before effective treatment can be given. Identification by cell culture can take up to two weeks. A series of rapid nucleic acid-based diagnostic tests, if available, could be used to determine, first the family, then the strain of a pathogen. Such tests are not in routine use, however, owing to the present labor intensive requirements for isolating nucleic acids and the absence of high speed nucleic acid (NA) tests.

The emergence of drug resistant strains of viruses and bacteria requires that strains be identified before effective medication can be prescribed. The culture and identification of strains of Mycobacteria, for example, is often difficult and prolonged, during which time a patient, if untreated, may infect others. A rapid NA-based test for *M. tuberculosis* with differentiation of strain could significantly assist in the worldwide control of tuberculosis.

Latent cancerous tissues can be detected from aberrant cellular gene sequences and effective treatment can be administered on the basis of knowledge of such sequences.

NA tests that provided rapid information on viral genotypes in patient blood would assist the effective management of HIV infection by allowing antiviral drug combinations to be changed in response to the appearance of mutant genotypes of HIV.

The present invention provides a device which enables automation of the purification of NA from blood or plasma and provides for rapid combination of purified NA with other components of assay mixtures for detecting or determining the quantity of particular NA sequences using techniques such as the polymerase chain reaction (PCR), the Ligase Chain Reaction (LCR) or using gene chip technology. Target molecules other than nucleic acids can be purified and identified by a method using the device of the invention.

All purification and detection procedures take place in sealed compartments provided in the device of the invention. This feature makes the invention particularly advantageous for use as a clinical diagnostic tool to provide rapid patient information with a minimal risk of contamination to healthcare workers and minimal risk of test contamination by "carryover" DNA.

### Current Nucleic Acid Purification Techniques

Nucleic acids have been isolated and purified using a wide variety of reagents and techniques, depending on the source of the NA and the use that is to be made of purified NA. Procedures for isolating NA from biological samples include 1) cell lysis using a combination of mechanical disruption, detergents, proteolytic enzymes, chaotropic agents or other chemicals, followed either by 2) extraction of the lysate using phenol or another organic solvent, or 3) centrifugation to clear the lysate, followed by 4) precipitation of the NA, or 5) adsorption of the NA onto solid phase materials, followed by 6) washing the solid phase materials, and 7) eluting bound NA from solid phase, or 8) centrifuging the precipitated NA and 9) resuspending the pellet, or 10) purifying the NA by gel electrophoresis, 11) cutting the band of NA from the gel and 12) recovering the NA from the gel or 13) obtaining purified NA using two or more rounds of cesium chloride density gradient centrifugation, with 14) recovery of NA, and 15) removing salts or changing the NA buffer using dialysis, gel chromatography or spin columns.

These procedures are carried out manually by trained personnel using vortexers, hand actuated pipettors, centrifuges, gel electrophoresis apparatus, hot water baths, vacuum aspiration for the removal of supernatants after centrifugation etc. The reproducibility of a lab's results often depends on the liquid handling skills of a particular technician, and the variable delays that may occur between multiple steps when a technician is carrying out several procedures in the laboratory at one time.

To prevent enzymatic destruction of NA molecules during purification, enzyme inhibitors have been used to block RNAse and DNAse digestion in the lysates. Cox (in Cox, R.A. (1968) "The use of guanidinium chloride in the isolation of nucleic acids" Methods Enzymol. 12B: 120.) showed that a high molar concentration of guanidinium salt not only disrupts secondary cellular structures, facilitating the liberation of nucleic acids, but it also inhibits the action of RNases owing to its action as a powerful chaotrope. As a result, guanidinium salts, particularly guanidinium thiocyanate, have become established in wide use in NA purification procedures.

Boom (in Boom, R., Sol, C.J.A., Salimans, M.M.M., Jansen, C.L., Wertheim-van Dillen, P.M.E., and van der Noordaa, J. (1990). "Rapid and simple method for purification of nucleic acids" J. Clin. Microbiol. 28 (3), 495.) studied the feasibility of combining a starting sample with a suspension of silica particles or diatoms in guanidinium thiocyanate (GuSCN). The recovery of NA from starting materials using this method was found to be problematic. Boom's U.S. Patent No. 5,234,809, assigned to Akzo, N.V., teaches the mixing of a NA containing sample with a chaotropic substance and a nucleic acid binding solid phase, separating the solid phase, and washing the solid phase. The NA purification process as taught by Boom is carried out using manual procedures such as vortexing a suspension of silica particles before manually adding starting material, centrifuging, removing supernatants by vacuum aspiration, pipetting wash solutions, vortexing pellets to resuspend them in wash solution before further centrifugation, incubating a sample tube in a water bath or heating block, etc.

Centrifugation based procedures can be simplified by the use of spin-tubes or spin columns, in which target molecules, after liberation using detergents, enzymes or chaotropes, are bound to a solid phase material at the bottom of a tube which is placed in a second centrifuge tube. The solid phase is washed by applying a wash solution on top and centrifuging the assembled pair of tubes, which causes the wash solution to pass through the solid phase and to be collected in the second centrifuge tube. Target molecules are collected in a centrifuge tube by applying an elution solution to the top of the solid phase, and centrifuging the pair of tubes to collect the eluate.

Although the aspiration step is eliminated using spin-tube techniques, the spin-tube method is still labor intensive and unsuitable for automation. As a result of the relatively long time that is required to complete these and other conventional NA purification protocols and the labor intensive nature of the protocols, these procedures add to the total cost of carrying out a NA diagnostic tests.

Attempts have been made to automate parts of nucleic acid purification techniques such as dispensing reagents, diluting, aspiration and mixing of liquids using digital syringe pumps, pipettors and robotics. U.S. Patent Nos. 4,488,241 and 4,510,684 assigned to Zymark Corp. and U.S. Patent No. 5,104,621 assigned to Beckman Instruments, Inc. disclose robotic systems having interchangeable tools and hands for manipulating cooperating embodiments of laboratory devices, permitting otherwise manual procedures to be performed by the robotic apparatus, according to a computer program that is entered by the user. These patents teach the use of general purpose robotic systems intended for use for a wide variety of chemical and laboratory procedures. These inventions have been designed to be as flexible as possible, and do not specifically provide for rapid isolation of nucleic acids or other target molecules or for combining purified NA with other components of an assay mixture.

The isolation of nucleic acids from liquids that contain infectious agents such as bacteria and viruses requires stringent sample handling techniques to avoid contamination and infection of health care workers. To minimise such risks NA purification techniques involving open pipetting and centrifugation specify that such procedures are carried out in a containment hood,

The requirement for such special containment facilities and other instruments needed for NA purification presently restrict these procedures to laboratory and clinical sites. Blood, for example, collected in remote areas of the world, must be rapidly transported to urban areas for NA purification and testing, since the blood contains enzymes that degrade the NAs that are to be isolated. If NAs could be isolated from blood in the field, the resulting purified NAs would be chemically stable and could be transported back with a reduced risk of degradation.

It would therefore be desirable to provide a biomolecular processor that did not require the use of manual pipetting, centrifugation and that was less labor intensive than current methods of purification of nucleic acids.

It would also be desirable to provide a biomolecular processor that secluded the nucleic acid containing sample from the environment while purification took place, so as to reduce the risk of infection of workers and contamination of the environment.

It would also be desirable to provide a biomolecular processor that is capable of isolating nucleic acids or other target molecules from fresh whole blood, plasma, sputum, urine, semen, tissue samples, feces, bacterial or cell cultures.

It would also be desirable to provide a biomolecular processor that is capable of combining purified nucleic acids or other target molecules with components of a test for detection or quantification of such target molecules.

It would also be desirable to provide a biomolecular processor that is capable of processing single samples or a multiplicity of samples and that is completely automated. in its operation.

### Objects of the Invention

A principal object of the present invention is to overcome the limitations of previous methods for isolating NA by combining a nucleic acid containing sample with a lysis reagent in an incubation vessel from which all nucleic acid binding materials are excluded, in order that nucleic acids may be completely liberated into the lysate solution before recovering the NA.

A further object of the invention is to eliminate all requirements for manual or skilled techniques such as vortexing, pipetting, aspiration, centrifugation, the use of spin-columns, extraction by organic solvents, suspension of pellets, or the use of vacuum manifolds for the purification of NA.

A further object is to provide means for automatically withdrawing a sample into the invention through a port that may be closed immediately afterwards to prevent contamination of the environment by the sample.

A further object of the invention is to provide means for thorough mixing of the sample with a lysis reagent within the invention; means for heating and controlling the temperature of said lysate mixture; means for removing said lysate from the incubation chamber; means for causing said lysate to pass through a solid phase matrix upon whose surface target molecules may be bound and thereby removed from said lysate; means for washing said solid phase matrix using suitable wash liquids; means for heating and controlling the temperature of said wash solutions; and finally, means for scrubbing said solid phase matrix and eluting target molecules using a suitable elution liquid; with means for heating and controlling the temperature of said elution liquid.

It is a further object of the invention to provide for isolation and purification of nucleic acids or other target molecules directly from blood, plasma, sputum, urine, semen, tissue samples, feces, bacterial or cell cultures by a fully automated means.

It is a further object of the present invention to . provide a means for the rapid combination of purified NA or other target molecules with other components of a NA or other assay for detection or quantitation of said target molecules.

It is yet another object of the invention to provide a means for isolation, purification and detection of NA or other target molecules that is rapid and does not require the use of any laboratory apparatus other than the invention itself.

### Summary of the Invention

In one aspect, the invention provides a device and an automated method for isolation and purification of nucleic acids or other target molecules from raw starting materials according to claims 1 and 10. A preferred embodiment for isolation and purification of total NA provides an apparatus into which starting material, such as whole blood, plasma, or a suspension of cells is drawn, and out of which purified nucleic acids are automatically dispensed, without need for pipetting, centrifugation or manual labor.

The invention may process a single sample at a time or it may process a multiplicity of samples using a dispensing apparatus cooperating with an array of tubes or wells in a microtiter plate, with means for heating and mixing contents of the said tubes or wells, in which samples containing nucleic acids or other target molecules are combined with lysis reagents, and from which purified target molecules may be obtained, with no requirement for manual pipetting, centrifugation, aspiration or manual labor.

The target molecules for isolation and purification may be of a single type, a combination of RNA, DNA, proteins or of other molecules.

In yet another aspect, the invention provides test kits consisting of disposable component devices and reagents according to claim 21. These enable target molecules to be purified, detected or quantitated, either from a single test sample or from a multitude of test samples, in such manner as to minimize the risk of contamination of the environment, or of the mechanical portion of the invention.

Preferred embodiments are described in the dependent claims 2-9 and 11-20.

### Brief Description of the Drawings

The foregoing and other objects and advantages of the invention will appear from the description which follows. In the description reference is made to preferred embodiments of the invention. Such embodiments do not necessarily represent the full scope of the invention.
FIG. 1 is a perspective view of the device of invention.
FIG. 2 is a plan view of a disposable extractor device of the invention preferred for use for processing individual samples of target molecules.
FIG. 3 is a plan view of valve components for the invention.
FIG. 4 is a plan view of a disposable extractor device preferred for use for single sample processing of target molecules, wherein the sample is automatically withdrawn from a capillary tube.
FIG. 5 is a schematic diagram of the operational hardware of a preferred embodiment of the invention.
FIG. 6 is a plan view of a disposable device component of the invention preferred for use for single sample processing of target molecules, wherein purified NAs are automatically combined with components of an NA assay mixture before being introduced into a PCR thermal cycler or other NA assay device.
FIG. 7 is a perspective view of the mechanical hardware component of a preferred embodiment of the invention used for processing a multiplicity of samples.
FIG. 8 A is a section view of a target molecule extraction pipettor tip preferred for use with a multiplicity of samples.
FIG. 8 B is a section view of a target molecule extraction pipettor tip.
FIG. 9 A, B, and C show the extraction, wash and elution steps for an extraction pipettor tip
FIG. 10 A is a perspective view of a 96-well microtiter plate formed in a plastics material.
FIG. 10 B is a plan view of the array of wells shown in FIG . 10 A.
FIG. 10 C is a section view taken along the line 2-2' of FIG 10 B.

### Detailed Description of the Drawings

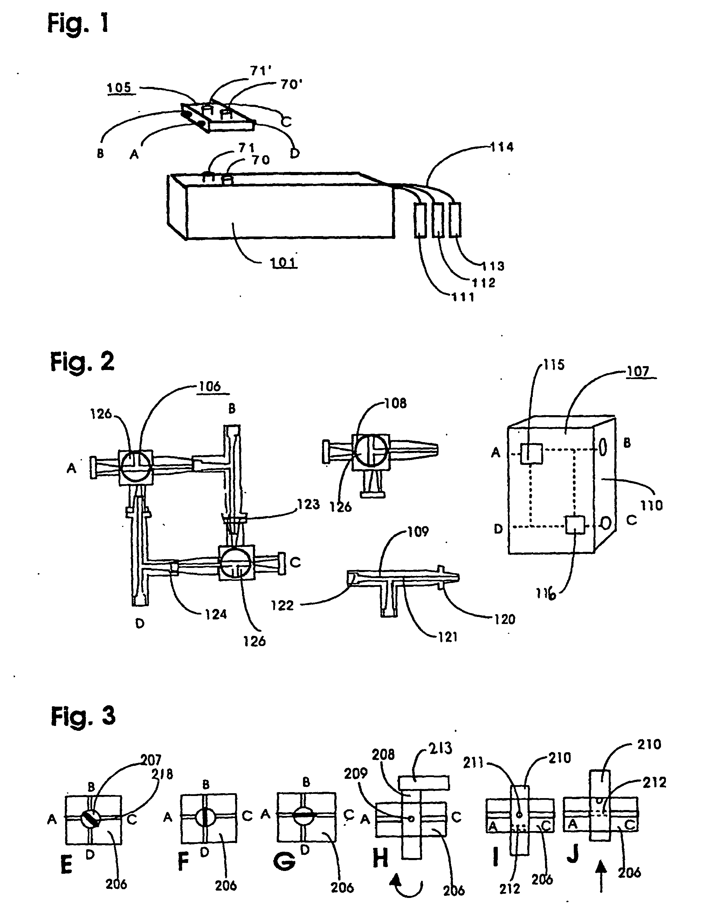

With reference to FIG. 1, a preferred embodiment of the invention comprises mechanical actuator 101 that is able to engage a single-use, disposable device 105 by means of adapters 70, 71 which engage cooperating adapters 70', 71' in device 105. Reagents 111, 112, 113 may be withdrawn into actuator 101 via tubes 114. Device 105 is provided with port A which may be opened to receive a sample for analysis, port B which may be connected to an incubation chamber, a thermal cycler or other treatment vessel, port C from which purified target molecules may be dispensed for collection or for further analysis, and port D through which reagents may enter from actuator 101 for the purification and identification of target molecules. Molecules contained in a sample are wholly contained within the device 105 and may not enter or contact surfaces of the actuator 101.

FIG. 2 shows preferred embodiments of an extractor device 106 and 107, their component parts consisting of stopcock 108 and tee connector 109.

With reference to FIG 3E - 3J, cross sections of several valve types are shown. Valve body 206, having ports at A, B, C, D which may be a selectively sealed or connected by means of moveable member 207 having one or more internal pathways 218 formed within such member.

FIG 3E shows member 207 in a position such as to prevent an internal connection between any ports A, B, C, D. FIG. 3F shows the position of member 207 which will allow connection between ports B and D; similarly FIG 3G shows the position of member 207 which will allow connection of ports A and C; numerous means are known for selecting pairs or combinations of ports using a moveable member 207.

FIG 3H shows a rotary member 208 having a handle 213 with a passage 209 drilled through the member 208. Ports A and C may be connected internally by rotating member 208 to align the passage 209 with said ports. Alternatively, moveable member 210 may contain drilled passages 211 and 212 which will connect ports within the body 206 by alignment using rectilinear motion, rather than rotary motion, of member 210, as shown in FIG 3J. The disposable device 105 of the present invention may be composed of either type of valve and such valves may have any number of selectable ports.

In FIG. 2, device 106 is made up of two stopcocks 108 joined sealingly together with two tee connectors 109 forming device 106 having four ports, A, B, C, D. Various pathways connecting the ports may be selected by turning moveable stopcock members 126 so as to align or block internal passages in the device. Preferred tee connectors 109 are formed with narrow bore internal passages 121, and with male luer fittings that contain hubs 120, female luer fittings that have internal shelves 122 which control the depth to which a mating luer component may enter, as shown at 123 and 124, thereby controlling the internal volume of assembled device 106.

Device 107 may be formed from 3 component parts, consisting of body 110, and moveable members 116 and 115 which may be moved so as to connect or seal off ports A, B, C, D according to positioning of said moveable members, as shown in FIGS. 3I and 3J.

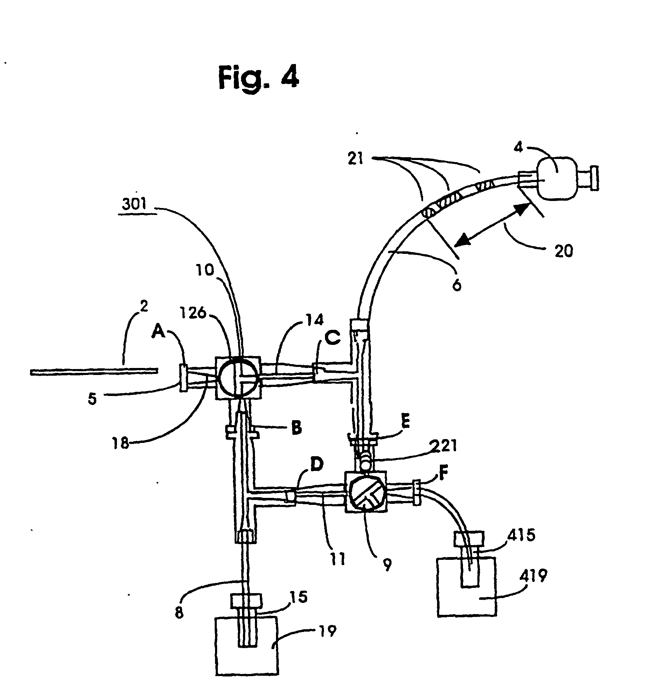

With reference to FIG. 4, a preferred embodiment of the disposable device 301 enables NA to be extracted and purified from a sample presented to the invention in a capillary tube 2. The sample makes physical contact only with disposable device 301, which is attached to mechanical actuator 101 (Fig 1). The mechanical actuator 101 does not make contact with a sample or molecules derived from a sample. Capillary tube 2 which contains a sample containing target molecules is inserted into port 5 until the outer edges of the end of the tube are pressed into and sealed on the inner tapered surface of the port at 18. The surface is made preferably made of an elastomeric material. Valve 10 is turned so that the sample may be withdrawn from the capillary into device 301. After induction of sample from into the device, said sample is isolated from the environment by closure of valve 10. Said sample is prevented from contact with reagents in the mechanical actuator 101 by a barrier of alternating volumes of fluid 21 and air, i.e., a segmented fluid barrier, as shown at 20.

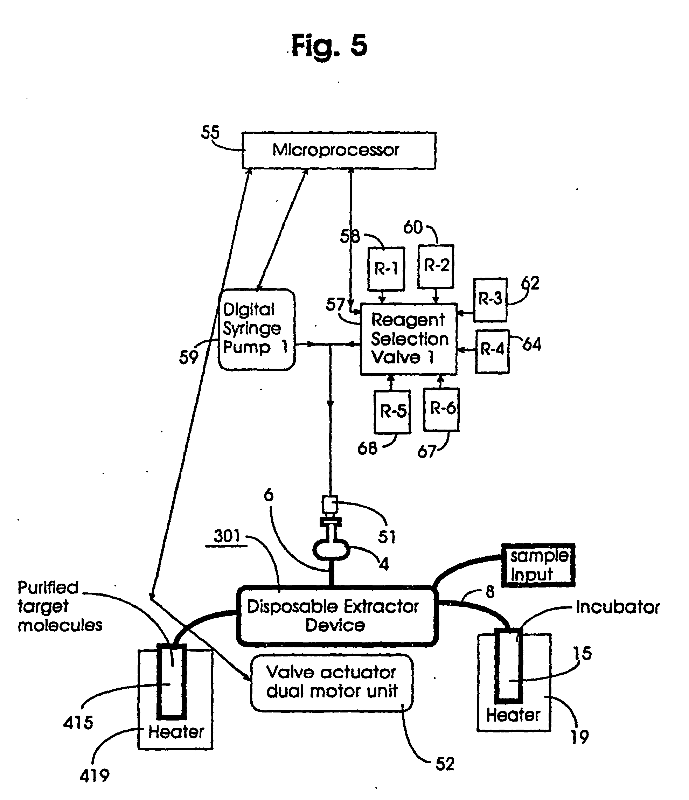

For the extraction of NAs, or other target molecules, device 301 is attached to actuator 101 via a connection between fittings 4 and 51 (Fig 5). Microprocessor 55 causes the dual motor stopcock drive unit 52 to set valve 9 (Fig 4) to a position in which all ports are blocked and to set valve 10 to a position in which ports B and C are connected, as shown in Fig 4. Microprocessor 55 then causes reagent selection valve 57 to select lysing reagent, R1 58, and causes digital pump 59 to begin dispensing reagent 58 into tube 6 of disposable device 301. Continued pumping of reagent 58 will cause it to enter into tube 8 and into incubation chamber 15.

A sample collected in capillary tube 2 for extraction of NA or other target molecules is inserted into rubber seal 18. Microprocessor 55 causes the dual motor stopcock drive unit 52 to set stopcock 10 to a position in which ports A and C are connected and port B is sealed off. Microprocessor 55 then induces pump 59 to withdraw the required sample volume, which causes the contents of capillary tube 2 to be drawn into valve 10 and into passage 14. The microprocessor then acts to return valve 10 to the position in which B and C are connected and causes the contents of capillary tube 2 to be pumped through the internal passages of the device into incubation chamber 15. The digital syringe pump 59 is then able to mix the contents of 15 by rapidly withdrawing and dispensing an appropriate quantity of the mixture in a to and fro manner causing agitation mixing of the lysis reagent and sample solution in 15. The incubation vial resides in a heated well of thermostatically controlled heating block 19 which heats the lysis mixture to assist in liberating nucleic acids.

It will be appreciated that any amount of lysis reagent 58 can be dispensed, followed by nitrogen gas or air, taken into syringe pump 59 from 60. Such a gas can be used to move reagents and samples through the device 301 and specific amounts of such gas can be injected in between different reagents to separate the reagents and prevent the reagents from having a common liquid interface and thereby mixing. In the summary that follows, gas is used in this manner to separate the different reagents; however in the interests of brevity, the details of valve and syringe movements necessary for the use of this gas will not be given. It will be understood that numerous combinations of different reagents and gases and of the uses of valves and syringe pumps all lie within the scope of the present invention.

When nucleic acids or other target molecules in incubation chamber 15 have been liberated, pump 59 withdraws the lysis mixture from 15 into tube 6. The internal volume of 6 has been chosen so that there is a protective space at 20 filled with a segmented fluid barrier to insulate non-disposable portions of the device from contact with molecules in the sample lysate which has been drawn into tube 6.

Stopcock 10 is now closed and stopcock 9 is turned so that ports E and D are connected. Pump 59 forces the lysate through target molecule adsorption filter element 21, through stopcock 9, into passage 11, and into chamber 15. Microprocessor 55 causes reagent selection valve 57 to select wash reagent, R3 62, and causes digital pump 59 to begin dispensing reagent 62 into device 301, through filter 221, causing said filter and bound target molecules to be washed. If needed, wash reagent R3 can be collected in flask 415 and heated by heater 419. In fact the heating of the wash reagent may be carried out before passage of lysate through the filter 221. In any case, the filter can be scrubbed using to and fro action of pump 59, and the wash liquid is collected in flask 15. Microprocessor 55 now causes reagent selection valve 57 to select elution reagent, R4 64, and to dispense R4 into device 301. When elution reagent has entered filter element 221, pump 59 facilitates the release of NA or other target molecules by alternately dispensing and withdrawing a small volume, to and fro, causing fluid turbulence within the filter element 221, before turning stopcock 9 to the position in which port E is connected to port F, and collecting the target molecules in a small volume in vial 415. Elution reagent R4 can be collected in flask 415 and heated by heater 419 before passage of lysate through the filter 221. In this case, target molecules can be eluted from the filter using a heated elution reagent. Other reagents R5, R6 are provided at 68, 67 respectively.

It will be appreciated that a sample can be introduced into device 301 via a pipette tip in place of a capillary tube 2, and that a flexible tube can be provided at fitting 5 so that a sample contained in a tube may be siphoned into the device. In addition provision could be made of a protected needle device to puncture the rubber stopper of a sample tube for removal of a sample from such a sealed tube. Such variations lie within the scope of the present invention. Furthermore, disposable syringes containing reagents could be provided in place of the digital syringes and selection valves described above. Any configuration of a disposable devices, including disposable syringes, stopcocks, fittings and tubing, which contacts molecules of the sample solution during the purification of target molecules by the process described by this invention falls within the scope of the invention.

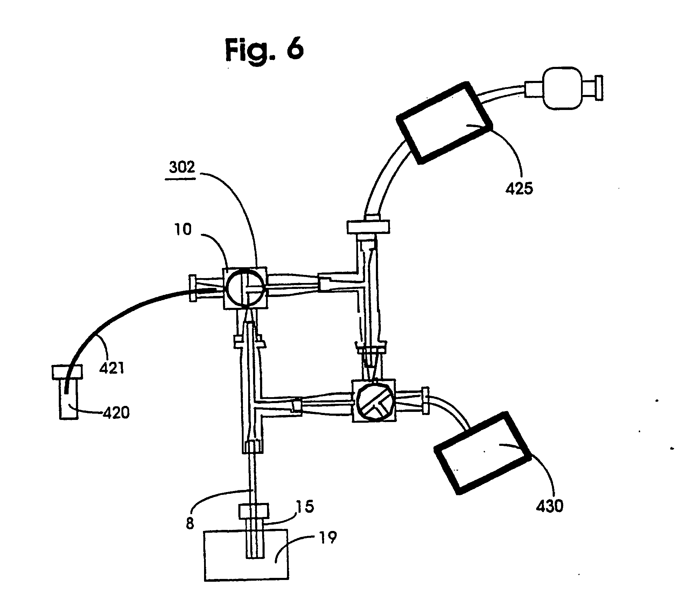

FIG 6. is a schematic representation of a preferred embodiment of a disposable device 302 used for determination of specific nucleotide sequences in a sample or for determining the quantity of target molecules. Purified nucleic acids or other target molecules are taken up from vial 420 via tube 421 and combined with other components of an assay in vial 15. The volume of target molecules taken can be accurately determined using digital pump 59 in combination with valve 10. For PCR assays the target NAs are given a hot start in vial 15 by preheating the master mix solution using heater 19. After thorough mixing the assay mixture is moved into device 430, which, in the case of PCR is a thermal cycling unit for amplification of target sequences. However other sample processing devices may be used. In the case of PCR, following the amplification step, amplified products are moved into device 425, for detection of amplified products. Device 425 can be a hybridization tube or a DNA chip. Wash reagents and detection reagents can be dispensed as required, for activation of fluorescent of chemiluminescent reactions in device 425. After measurements are made, disposable device 302 is safely disposed of without contaminating the environment.

The assay and detection embodiment of the invention just described may be coupled with the target molecule purification embodiment of the invention described earlier to enable specific nucleic acid sequences to be detected and quantitated automatically from a starting sample. The coupled use of the two embodiments of the invention lies within the scope of the invention.

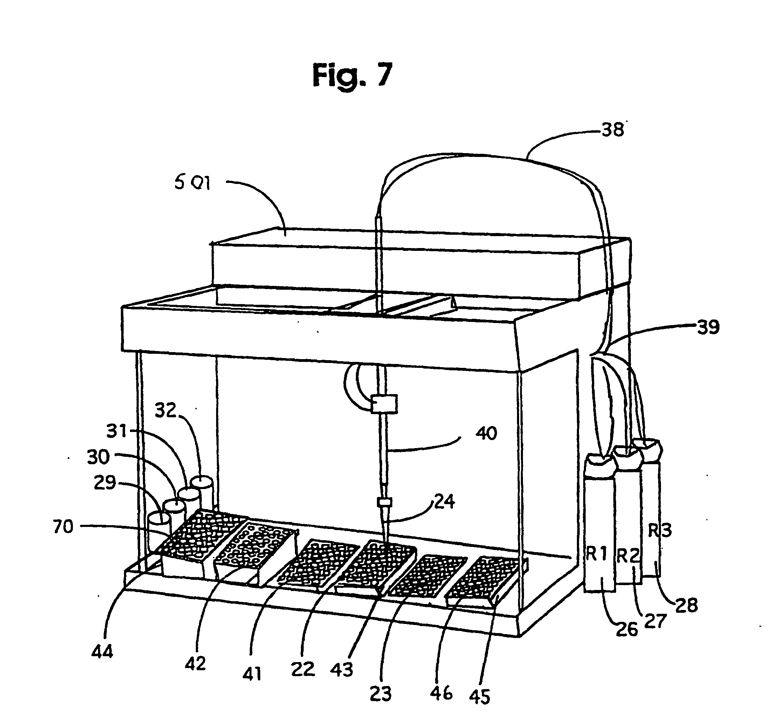

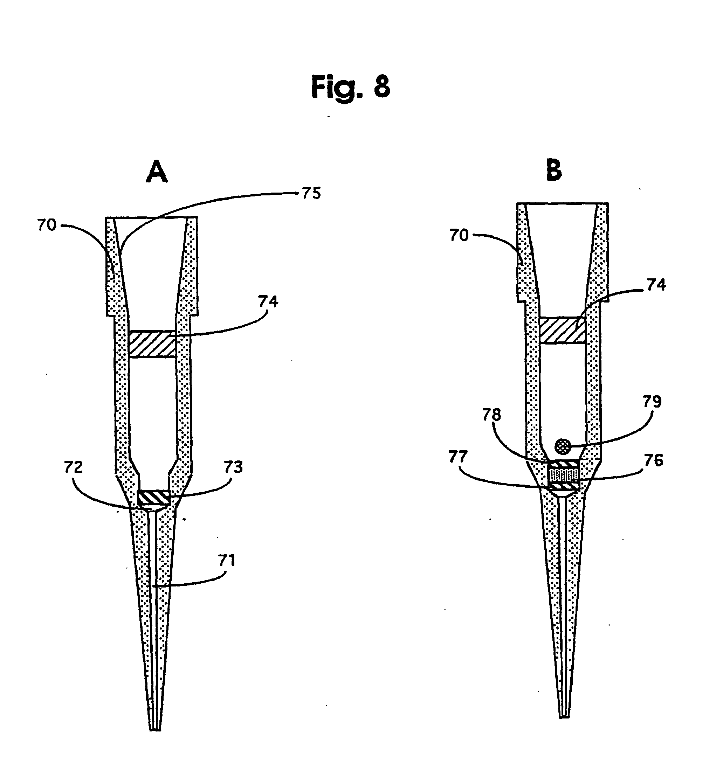

Fig. 7 shows an embodiment of the invention 501 preferred when numerous samples of blood, plasma or other nucleic acid, or other target molecule, containing material is required to be processed. Samples are presented for processing in racks or arrays of tubes 41, or in the wells of a microplate. Robotic arm 40 dispenses lysis reagent R1 26 by means of a valve and syringe pump located behind 39 passing through pipe 38 and into each incubation well in microplate 22, which sits in a heated block 43. Robotic arm 40 picks up a clean pipettor tip 24 from a storage rack of tips at 42 and transfers a portion of a first sample in 41 to an incubation well in 22. The microprocessor controller of the device mixes the sample thoroughly with the lysis reagent by turbulent aspiration of the mixture, as described previously. The pipettor tip is discarded and an a fresh tip picked up to combine a next sample with lysis reagent. After all samples have been combined and mixed with lysis reagent, and the lysates have been heated to release NA, or other target molecules, robotic arm 40 picks up a clean extractor pipettor tip 70, Fig 8 A or 8 B, held in rack 44, Fig. 7.

### The Extractor Tip

The body of the extractor tip 70 (Fig 8) is preferably formed from inert plastics material, having a low internal volume entrance 71, with an internal diameter typically between 0.3mm and 0.8mm, a low dead volume collector cavity 72, a porous, solid phase material 73 capable of binding nucleic acids or other target molecules, and removing such molecules from solution as a lysate solution passes through porous material 73. The means of binding target molecules may be by hydrophobic, ionic or any other interaction. Preferably extractor tips 70 are also fitted with a porous hydrophobic or scavenger containing element 74, through which air may pass, but which element will not allow nucleic acids or other target molecules to pass, thereby preventing contamination of the pipettor instrument. Extractor pipettor tip 70 has a tapered fitting portion 75 to allow it to be sealingly engaged with a pipettor. Fig 8 B shows another embodiment of the invention having solid phase binding material 76, which may be in particulate form, held between inert porous supports 77 and 78. Above porous support 78 is shown reagent 79 in solid form which may contact a lysate or other liquid after it has passed through the binding material. Reagent 79 may interact with a liquid on contact, dissolving and releasing active agents such as buffering compounds or enzymes or components of assays, or it may disburse insoluble elements such as silica or derivatised latex particles into the liquid. Any type or combination of filtration or selective binding element and any type of separate reagent or particle kept in the above position as shown is within the scope of this invention.

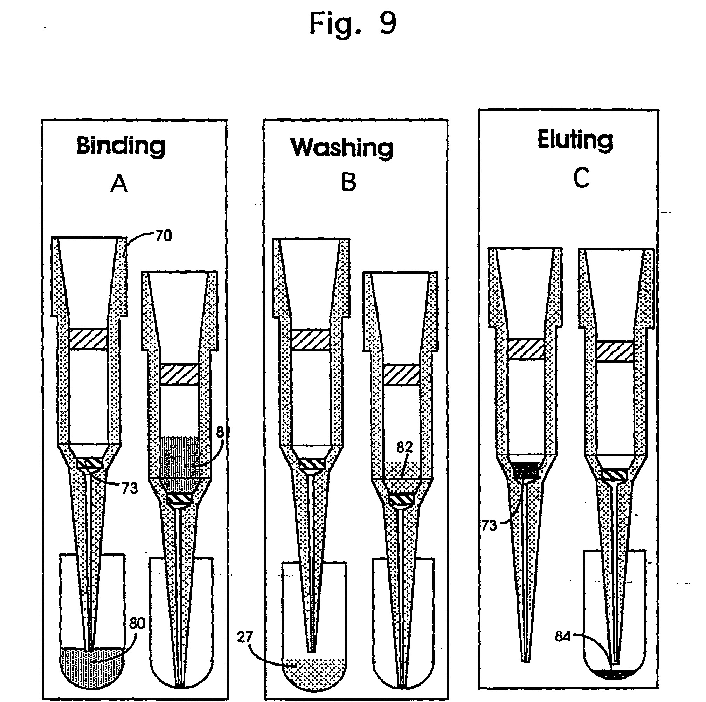

The robotic arm 40 of the invention picks up a clean extractor pipettor tip 70, held in rack 44, Fig. 7. and withdraws lysate (80, Fig. 9A) from an incubation well in 43. The lysate may be dispensed and taken up (as shown at 81, Fig. 9B) several times to assure complete adsorption of target molecules to element 73, Fig. 9. Afterwards the lysate solution is returned to well 22 and robotic arm 40 washes the filter element 73 using wash solution R2 27 that has been previously dispensed into wells at 23. Filter element 73 may be washed multiple times, at 82 (fig. 9B), using reagents held in multiple wells at 23. Finally a small amount of elution reagent R3 28, typically 20 to 100 microliters, in one quadrant of a multiple well at 23 is used to scrub the filter 73 to and fro, to remove target molecules before dispensing the target molecules 84 into reagent tubes or assay mixtures at 46, depending on the protocol being followed.

### Automated Make-up and Storage of Assay Solutions

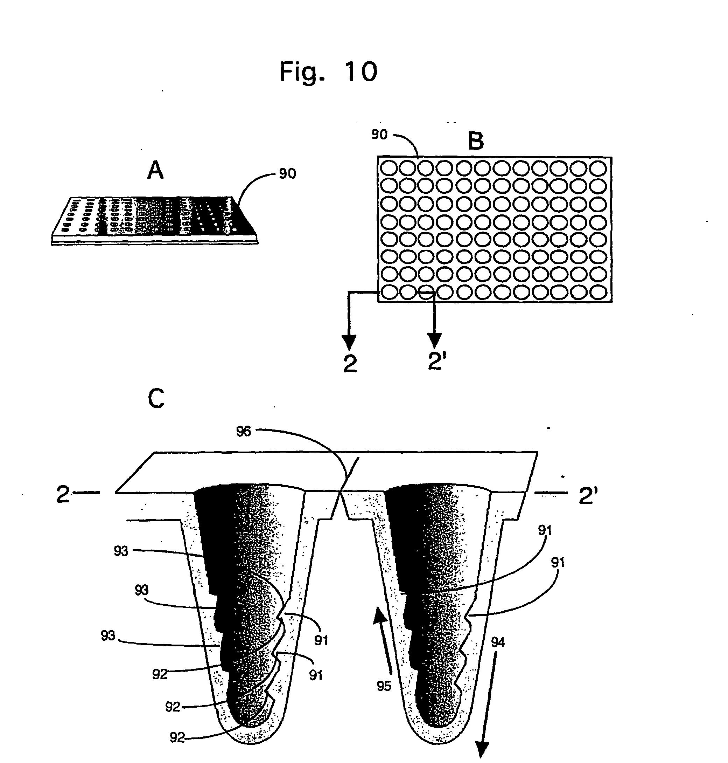

Special tubes, strips of tubes or wells in microplates may be formed in such a manner as to facilitate storage of frozen solutions. The mixing of such solutions, after thawing, and the turbulent vortex mixing of combinations of liquids in such tubes enables combination for assays. Figs. 10 A and B show a microplate 90. Fig 10 C shows detail of a cross section of two wells formed in plate 90. It is clear that this same cross-section can be formed in a tube or bottle, or strip of joined tubes and that these embodiments would lie within the scope of this invention.

A symmetrical protrusions 91, may be formed on the internal surfaces of the tubes or wells having a first surface 92 protruding at a relatively steep angle and a second surface 93 formed at a less steep angle. Said protrusions may be organized on the inside surface of a tube in a train with the sharp angles aligned so that the protrusions homologously-follow each other, and a train of protrusions may spiral from the top, larger end of a generally conical shaped tube or well down into the bottom, along path 94 and back up towards the top along path 95 as shown. When a tube having such protrusions is subjected to vibratory motion it is clear that a liquid in the tube will be pushed down along path 94 and back up path 95. By this means simple rectilinear motion will induce vortex motion of a liquid in a tube. It is also clear that a solution that is frozen in a tube having such protrusions will be held in place in the tube and will not be able to fall out, since the said protrusions will lie within the frozen mass. A microplate used with the invention preferably has cuts 96 formed between rows of the plate to facilitate the breaking off of rows for their use alone, when all wells in the plate do not need to be used.

Robot arm 40 uses tips 24 to dispense and combine reagents 29, 30, 31, 32 for an assay into the wells of a storage microplate 90 in location 46 which is located on a temperature controlled microplate block 45, the temperature of such a block being controlled by the instrument microprocessor, preferably heated by resistive heating and cooled by thermoelectric cooling. After assay solutions have been made up, the individual solutions in the wells of the plate may be frozen *in situ* by causing the block temperature to descend below the freezing point of the mixture. This ability is beneficial and useful for preparing, freezing and storing multiple plates of assay "master-mix" before target molecules are to be extracted, or, for freezing and storing microplates that contain purified nucleic acids or other target molecules after purification, or, for freezing and storing microplates that contain complete assay mixtures of master-mix and purified nucleic acids or other target molecules. Such frozen plates may then be easily and safely transported to another location, for example, for PCR thermal cycling, without fear that small volumes of liquid will be lost en route from splashing.

## Claims

1. An apparatus for carrying out a process of isolating and purifying a target molecule from a starting material such as blood, plasma, urine, semen or cell suspension comprising a cell containing said target molecule, the apparatus comprising:
(a) a first part which does not make physical contact with the starting material or molecules derived from the starting material, wherein the first part controls the movement of fluids within internal fluid pathways of a second, disposable part, the first part comprising: a digital pump (59) a multiport valve (57), and a plurality of reagent reservoirs (59-60, 62, 64, 67, 68) such that operation of the pump in tandem with opening of a selected port in the multiport valve causes a selected reagent to flow within an internal fluid pathway of the second part and to contact the starting material, and wherein rapid to and fro pumping of a fluid in an internal fluid pathway causes mixing and agitation of mixtures of reagents and samples; means for heating and controlling the temperature of reagents supplied to the second part; and at least one dual valve actuating device (52), which comprises dual stepper motors, each motor causing movement of a rotating stopcock handle or a linearly movable valve member of a respective valve (9, 10) present in the second part; and
(b) the second, disposable, part which may be easily attached to or detached from the first part, and which comprises an incubation chamber (15) into which the starting material is drawn, and in which the starting material is lysed by contact with a lysis reagent, and from which isolated and purified target molecule is dispensed via a solid phase filter means, the second part further comprising internal fluid pathways for movement of sample and reagents, and movable valve members of two valves (9, 10) located in the fluid pathways.

2. Apparatus according to claim 1, in which the second part comprises a portion which co-operates, so as to form a seal, with the end of a capillary tube or other small tube in which is held the starting material, the second part comprising a fluid fitting that may be sealingly connected to the first part of the apparatus.

3. Apparatus according to claim 2, in which starting material is drawn into the disposable second part via a tube conduit, the end of which is placed in a liquid sample held in a sample tube or a microtiter plate.

4. Apparatus according to claim 2, in which the starting material is drawn into the disposable second part via a needle which punctures an elastomeric stopper of a sample tube.

5. Apparatus according to claim 2, wherein the disposable second part comprises two 4-way stopcocks and two low dead-volume tee connectors together with attached tubing, filters, and vials, the tee connectors being formed with hubs on male luer fittings and corresponding shelves in female luer fittings to increase the reproducibility of the internal volume of the connectors when assembled.

6. Apparatus according to claim 5, in which the stopcock handles of the disposable second part are rotated by two motors mounted together on a single plate with the distance between the axes of the two motors being the same as the distance between the axes of the two stopcock handles; the apparatus further being provided with drive adapters allowing each stopcock handle to snap into the adapter and thereby to be controlled by the respective motor, permitting each stopcock to be operated independently from the other and any combination of stopcock ports to be blocked or connected together.

7. Apparatus according to claim 2, in which the disposable second part comprises valves that are linearly actuated and are connected by internal passages formed in a single device housing.

8. Apparatus according to claim 1 capable of performing an assay on a purified target molecule, the apparatus comprising: a disposable portion into which purified target molecules are drawn and combined with assay reagents; and a testing component such as a thermal cycler, fluorescence detector or gene chip the operation of which is under the control of the first part (a) of the apparatus.

9. Apparatus according to claim 8, in which the disposable portion is joined with the disposable part (b), thereby enabling target molecules to be purified and subsequently assayed totally under the control of the apparatus.

10. A process of isolating and purifying a nucleic acid target molecule, the process comprising the step of introducing a starting material comprising the target molecule into an apparatus in accordance with any one of the preceding claims, and using the apparatus to isolate and purify the target molecule.

11. A process according to claim 10, comprising use of a lysis reagent containing a greater than 5 molar concentration of a chaotropic reagent, and a concentration of 0.1% - 5% of a non-ionic detergent.

12. A process according to claim 11, wherein the chaotropic reagent is selected from the group consisting of urea, guanidine isothiocyanate or potassium iodide.

13. A process according to claim 11 or 12, wherein the non-ionic detergent is octylphenoxypolyethoxyethanol.

14. A process according to claim 10, comprising use of a nucleic acid binding filter which contains fibers or particles of polystyrene, nitrocellulose, glass, or quartz.

15. A process according to claim 10, wherein target molecules are captured using lysis reagents that contain probes capable of binding to the target molecules.

16. A process according to claim 15 comprising, after agitation and heating of the lysis mixture, addition of a further reagent to rapidly cool the lysis mixture and alter the solvent environment thereof to promote binding of the probes to the target molecules, and causing the lysis mixture to pass through a porous, solid phase filter capable of binding the probes and target molecules which have been captured by the probes.

17. A process according to claim 16, wherein the probes are RNA, DNA, PNA or other molecules capable of being selectively bound to target nucleic acid sequences, which probes have a second functional portion that does not selectively bind to target molecules, and the filter has a corresponding molecule capable of binding to the second functional portion.

18. A process according to claim 17, wherein the second functional portion comprises biotin or a poly A tail.

19. A process according to claim 17 or 18, wherein the filter comprises avidin or polyT nucleotides.

20. A process according to any one of claims 16-19, wherein the target molecules are nucleic acid sequences, the probes are 5'-biotinylated oligonucleotides between 20 to 40 nucleotides in length that are complementary to the target nucleic acid sequence, the further lysis reagent contains at least 0.7 molar sodium phosphate buffer, pH 7.4, and the filter for binding the probes contains modified avidin residues capable of releasing bound biotin under mildly acidic conditions.

21. A kit for carrying out the process of claim 10, the kit comprising a disposable part (b) of apparatus in accordance with claim 1, and such lysis, wash and elution reagents as may be required to carry out the nucleic acid purification process.

## Patentansprüche

1. Vorrichtung zur Durchführung eines Verfahrens zur Isolation und Reinigung eines Zielmoleküls aus einem Ausgangsmaterial wie Blut, Plasma, Urin, Samen oder Zellsuspension, das eine Zelle aufweist, die das Zielmolekül enthält, wobei die Vorrichtung umfasst:
a) einen ersten Teil, der nicht mit dem Ausgangsmaterial oder Molekülen, die von dem Ausgangsmaterial abstammen, in physischen Kontakt gelangt, wobei der erste Teil die Bewegung von Fluiden innerhalb innerer Fluidwege eines zweiten, wegwerfbaren Teils steuert, wobei der erste Teil Folgendes umfasst: eine digitale Pumpe (59), ein Mehrwegventil (57) und eine Vielzahl von Reagens-Behältern (59-60, 62, 64, 67, 68), so dass der Betrieb der Pumpe in Verbindung mit dem Öffnen einer ausgewählten Öffnung in dem Mehrwegventil bewirkt, dass ein ausgewähltes Reagens innerhalb eines inneren Fluidwegs des zweiten Teils strömt und mit dem Ausgangsmaterial in Kontakt gelangt und wobei ein rasches Hin- und Herpumpen eines Fluids in einem inneren Fluidweg ein Mischen und Umrühren von Mischungen von Reagenzien und Proben bewirkt; Mittel zum Erhitzen und Steuern der Temperatur von Reagenzien, die dem zweiten Teil zugeführt werden; und wenigstens eine duale Ventilbetätigungseinrichtung (52), die duale Schrittmotoren umfasst, wobei jeder Motor eine Bewegung eines drehenden Absperrhahngriffs oder eines linear bewegbaren Ventilglieds eines entsprechenden Ventils (9, 10) bewirkt, das in dem zweiten Teil vorhanden ist; und
b) den zweiten, wegwerfbaren Teil, der leicht an dem ersten Teil befestigt oder von diesem gelöst werden kann und der eine Inkubationskammer (15) umfasst, in die das Ausgangsmaterial gezogen wird und in der das Ausgangsmaterial durch Kontakt mit einem Lysereagens lysiert wird und aus der isoliertes und gereinigtes Zielmolekül durch ein Festphasen-Filtermittel abgeführt wird, wobei der zweite Teil außerdem innere Fluidwege für eine Bewegung von Probe und Reagenzien sowie bewegliche Ventilglieder von zwei Ventilen (9, 10), die in den Fluidwegen angeordnet sind, umfasst.

2. Vorrichtung nach Anspruch 1, bei der der zweite Teil einen Abschnitt umfasst, der zur Bildung einer Abdichtung mit dem Ende eines Kapillarrohrs oder eines anderen kleinen Rohrs zusammenwirkt, in dem das Ausgangsmaterial gehalten wird, wobei der zweite Teil ein Fluid-Anschlussstück umfasst, das abdichtend mit dem ersten Teil der Vorrichtung verbunden werden kann.

3. Vorrichtung nach Anspruch 2, bei der Ausgangsmaterial in den wegwerfbaren zweiten Teil durch eine Röhrenleitung gezogen wird, deren Ende in einer Flüssigkeitsprobe platziert wird, die in einer Probenröhre oder einer Mikrotitrierplatte gehalten wird.

4. Vorrichtung nach Anspruch 2, bei der das Ausgangsmaterial in den wegwerfbaren zweiten Teil durch eine Nadel gezogen wird, die einen Elastomerstopfen einer Probenröhre durchsticht.

5. Vorrichtung nach Anspruch 2, bei der der wegwerfbare zweite Teil zwei 4-Wege-Absperrhähne und zwei untere Totvolumen-T-Verbindungen zusammen mit daran befestigten Röhren, Filtern und Glasfläschchen umfasst, wobei die T-Verbindungen mit Stempeln an männlichen Luer-Anschlussstücken und entsprechenden Sockeln in weiblichen Luer-Anschlussstücken ausgebildet sind, um die Reproduzierbarkeit des Innenvolumens der Verbindungseinrichtungen beim Zusammenbau zu vergrößern.

6. Vorrichtung nach Anspruch 5, bei der die Absperrhahngriffe des wegwerfbaren zweiten Teils von zwei Motoren gedreht werden, die zusammen an einer einzelnen Platte befestigt sind, wobei der Abstand zwischen den Achsen der beiden Motoren gleich dem Abstand zwischen den Achsen der beiden Absperrhahngriffe ist; wobei die Vorrichtung weiterhin mit Antriebsadaptem versehen ist, die es ermöglichen, dass jeder Absperrhahngriff in dem Adapter einrastet und dadurch durch den entsprechenden Motor gesteuert werden kann, wobei es möglich ist, dass jeder Absperrhahn unabhängig von dem anderen betrieben wird und jede beliebige Kombination von Absperrhahnöffnungen blockiert oder miteinander verbunden wird.

7. Vorrichtung nach Anspruch 2, bei der der wegwerfbare zweite Teil Ventile umfasst, die linear betatätigt werden und durch innere Kanäle verbunden sind, die in einem einzelnen Einrichtungsgehäuse ausgebildet sind.

8. Vorrichtung nach Anspruch 1, mit der ein Test an einem gereinigten Zielmolekül durchgeführt werden kann, wobei die Vorrichtung umfasst: einen wegwerfbaren Abschnitt, in den gereinigte Zielmoleküle gezogen und mit Testreagenzien kombiniert werden; und eine Testkomponente wie einen Thermocycler, Fluoreszenzdetektor oder Genchip, deren Betrieb von dem ersten Teil (a) der Vorrichtung gesteuert wird.

9. Vorrichtung nach Anspruch 8, bei der der wegwerfbare Abschnitt mit dem wegwerfbaren Teil (b) verbunden ist, wodurch es ermöglicht wird, die Zielmoleküle zu reinigen und nachfolgend von der Vorrichtung gesteuert vollständig zu untersuchen.

10. Verfahren zur Isolation und Reinigung eines Nukleinsäure-Zielmoleküls, wobei das Verfahren den Schritt umfasst, ein Ausgangsmaterial, das das Zielmolekül umfasst, in eine Vorrichtung gemäß einem der vorigen Ansprüche einzuführen und die Vorrichtung zu verwenden, um das Zielmolekül zu isolieren und zu reinigen.

11. Verfahren nach Anspruch 10, das die Verwendung eines Lysereagens umfasst, das eine Konzentration eines chaotropen Reagens, die größer ist als 5 mol, sowie eine Konzentration von 0,1%-5% eines nichtionischen Detergens enthält.

12. Verfahren nach Anspruch 11, bei dem das chaotropische Reagens aus der Gruppe ausgewählt wird, die aus Urea, Guanidin-Isothiocyanat oder Kaliumiodid besteht.

13. Verfahren nach Anspruch 11 oder 12, bei dem das nichtionische Detergens Octylphenoxypolyethoxyethanol ist.

14. Verfahren nach Anspruch 10, das die Verwendung eines Nukleinsäure-Bindefilters umfasst, der Fasern oder Partikel von Polystyrol, Nitrocellulose, Glas oder Quarz enthält.

15. Verfahren nach Anspruch 10, bei dem Zielmoleküle unter Verwendung von Lysereagenzien eingefangen werden, die Sonden enthalten, die an die Zielmoleküle gebunden werden können.

16. Verfahren nach Anspruch 15, das nach dem Umrühren und Erhitzen der Lysemischung die Hinzufügung eines weiteren Reagens umfasst, um die Lysemischung rasch abzukühlen und ihre Lösungsmittelumgebung zu ändern, um die Bindung der Sonden an die Zielmoleküle zu fördern und zu bewirken, dass die Lysemischung durch einen porösen Festphasenfilter hindurchgeht, der die Sonden und die Zielmoleküle, die von den Sonden eingefangen wurden, binden kann.

17. Verfahren nach Anspruch 16, bei dem die Sonden RNS, DNS, PNS oder andere Moleküle sind, die selektiv an die Zielnukleinsäuresequenzen gebunden werden können, wobei die Sonden einen zweiten Funktionsabschnitt aufweisen, der nicht selektiv an die Zielmoleküle gebunden wird, und wobei der Filter ein entsprechendes Molekül aufweist, das an den zweiten Funktionsabschnitt gebunden werden kann.

18. Verfahren nach Anspruch 17, bei dem der zweite Funktionsabschnitt Biotin oder einen polyA-Schwanz aufweist.

19. Verfahren nach Anspruch 17 oder 18, bei dem der Filter Avidin oder polyT-Nukleotide aufweist.

20. Verfahren nach einem der Ansprüche 16 bis 19, bei dem die Zielmoleküle Nukleinsäuresequenzen sind, die Sonden 5'-biotinylisierte Oligonukleotide mit einer Länge zwischen 20 und 40 Nukleotiden sind, die zu der Ziel-Nukleinsäuresequenz komplementär sind, das weitere Lysereagens wenigstens 0,7-molaren Natriumphosphatpuffer, pH 7,4 aufweist, und der Filter zum Binden der Sonden modifizierte Avidinrückstände enthält, die gebundenes Biotin unter leicht sauren Bedingungen freisetzen können.

21. Satz zum Durchrühren des Verfahrens nach Anspruch 10, wobei der Satz einen wegwerfbaren Teil (b) der Vorrichtung gemäß Anspruch 1 sowie solche Lyse-, Wasch- und Eluierungsreagenzien umfasst, die erforderlich sein können, um das Nukleinsäureremigungsverfahren durchzuführen.

## Revendications

1. Dispositif pour mettre en oeuvre un procédé d'isolement et de purification d'une molécule cible à partir d'un matériau de départ tel que du sang, du plasma, de l'urine, du sperme, ou une suspension cellulaire comprenant une cellule contenant ladite molécule cible, le dispositif comprenant :
(a) une première partie qui ne vient pas en contact physique avec le matériau de départ ni avec des molécules provenant du matériau de départ, dans laquelle la première partie commande le déplacement de fluides dans des trajets de fluide internes d'une deuxième partie jetable, la première partie comportant : une pompe numérique (59), une vanne à plusieurs orifices (57), et une pluralité de réservoirs de réactif (59, 60, 62, 64, 67, 68), de telle sorte qu'un fonctionnement de la pompe en association avec une ouverture d'un orifice sélectionné dans la vanne à plusieurs orifices amène un réactif sélectionné à s'écouler dans un trajet de fluide interne de la deuxième partie et à venir en contact avec le matériau de départ, et dans laquelle un pompage rapide en va-et-vient d'un fluide dans un trajet de fluide interne provoque un mélange et une agitation de mélanges de réactifs et d'échantillons ; des moyens pour chauffer et contrôler la température de réactifs alimentés vers la deuxième partie ; et au moins un dispositif d'actionnement double vanne (52) comprenant des moteurs étagés doubles, chaque moteur provoquant un déplacement d'une poignée de robinet d'arrêt rotative ou d'un élément de vanne mobile de manière linéaire d'une vanne respective (9, 10) présente dans la deuxième partie ; et
(b). la deuxième partie jetable, qui peut être fixée facilement sur la première partie, ou enlevée de celle-ci, et qui comprend une chambre d'incubation (15) dans laquelle le matériau de départ est attiré, et dans laquelle le matériau de départ est lysé par contact avec un réactif de lyse, et à partir de laquelle une molécule cible isolée et purifiée est distribuée via des moyens formant filtre de phase solide, la deuxième partie comportant en outre des trajets de fluide internes pour un déplacement d'un échantillon et de réactifs, et des éléments de vanne mobiles de deux vannes (9, 10) situés dans les trajets de fluide.

2. Dispositif selon la revendication 1, dans lequel la deuxième partie comprend une partie qui coopère, de manière à former un joint d'étanchéité, avec l'extrémité d'un tube capillaire ou d'un autre petit tube dans lequel est maintenu le matériau de départ, la deuxième partie comprenant un raccord de fluide qui peut être relié de manière étanche à la première partie du dispositif.

3. Dispositif selon la revendication 2, dans lequel le matériau de départ est attiré dans la deuxième partie jetable via un conduit de tube, dont l'extrémité est placée dans un échantillon liquide maintenu dans un tube échantillon ou une plaque de micro-titration.

4. Dispositif selon la revendication 2, dans lequel le matériau de départ est attiré dans la deuxième partie jetable via une aiguille qui perce un bouchon en élastomère d'un tube échantillon.

5. Dispositif selon la revendication 2, dans lequel la deuxième partie jetable comporte deux robinets à 4 voies et 2 raccords en T à volume mort bas ensemble avec une tubulure, des filtres et des flacons reliés, les raccords en T étant formés avec des moyeux sur des raccords de type Lueur mâles et des coques correspondantes dans des raccords de type Lueur femelles pour augmenter la reproductibilité du volume interne des raccords une fois assemblés.

6. Dispositif selon la revendication 5, dans lequel les poignées de robinet d'arrêt de la deuxième partie jetable sont mises en rotation par deux moteurs montés ensemble sur une plaque unique, la distance entre les axes des deux moteurs étant identique à la distance entre les axes des deux poignées de robinet; le dispositif étant en outre muni d'adaptateurs d'entraînement permettant à chaque poignée de robinet d'arrêt de s'emboîter dans l'adaptateur et ainsi d'être commandée par le moteur respectif, en permettant à chaque robinet d'arrêt d'être actionné indépendamment de l'autre, et à une combinaison quelconque d'orifices de robinet d'arrêt d'être bloqués ou reliés ensemble.

7. Dispositif selon la revendication 2, dans lequel la deuxième partie jetable comprend des vannes qui sont actionnées de manière linéaire, et qui sont reliées par des passages internes formés dans un boîtier de dispositif unique.

8. Dispositif selon la revendication 1, capable d'effectuer un test sur une molécule cible purifiée, le dispositif comprenant : une partie jetable dans laquelle des molécules cibles purifiées sont attirées et combinées avec des réactifs de test; et un composant de test tel qu'un dispositif de fonctionnement par cycle thermique, un détecteur de fluorescence ou une puce d'ADN dont le fonctionnement est sous la commande de la première partie (a) du dispositif.

9. Dispositif selon la revendication 8, dans lequel la partie jetable est reliée à la partie jetable (b), permettant ainsi à des molécules cibles d'être purifiées et ensuite testés totalement sous la commande du dispositif.

10. Procédé d'isolement et de purification d'une molécule d'acide nucléique cible, le procédé comprenant l'étape consistant à introduire un matériau de départ comprenant la molécule cible dans un dispositif selon l'une quelconque des revendications précédentes, et à utiliser le dispositif pour isoler et purifier la molécule cible.

11. Procédé selon la revendication 10, comprenant l'utilisation d'un réactif de lyse contenant une concentration molaire supérieure à cinq d'un réactif chaotropique, et une concentration de 0,1 % à 5 % d'un détergent non-ionique.

12. Procédé selon la revendication 11, dans lequel le réactif chaotropique est sélectionné dans le groupe constitué d'urée, isothiocyanate de guanidine ou iodure de potassium.

13. Procédé selon la revendication 11 ou 12, dans lequel le détergent non-ionique est du octylphénoxypolyéthoxyéthanol.

14. Procédé selon la revendication 10, comprenant l'utilisation d'un filtre de fixation d'acide nucléique qui contient des fibres ou des particules de polystyrène, de nitrocellulose, de verre ou de quartz.

15. Procédé selon la revendication 10, dans lequel des molécules cibles sont capturées en utilisant des réactifs de lyse qui contiennent des sondes capables de se fixer sur les molécules cibles.

16. Procédé selon la revendication 15, comprenant, après agitation et chauffage du mélange de lyse, l'ajout d'un réactif supplémentaire pour refroidir rapidement le mélange de lyse et modifier son environnement de solvant afin de favoriser la fixation des sondes sur les molécules cibles, et faire passer le mélange de lyse à travers un filtre de phase solide poreux capable de fixer les sondes et les molécules cibles qui ont été capturées par les sondes.

17. Procédé selon la revendication 16, dans lequel les sondes sont de l'ARN, de l'ADN, du PNA ou d'autres molécules capables d'être liées de manière sélective sur des séquences d'acide nucléique cibles, lesquelles sondes ont une deuxième partie fonctionnelle qui ne se fixe pas de manière sélective sur des molécules cibles, et le filtre a une molécule correspondante capable de se fixer sur la seconde partie fonctionnelle.

18. Procédé selon la revendication 17, dans lequel la deuxième partie fonctionnelle comporte de la biotine ou une queue de poly-A.

19. Procédé selon la revendication 17 ou 18, dans lequel le filtre comporte de l'avidine ou des nucléotides poly-T.

20. Procédé selon l'une quelconque des revendications 16 à 19, dans lequel les molécules cibles sont des séquences d'acide nucléique, les sondes sont des oligonucléotides biotinylés en 5' de 20 à 40 nucléotides de longueur, qui sont complémentaires de la séquence d'acide nucléique cible, le réactif de lyse supplémentaire contient au moins un tampon de phosphate de sodium à 0,7 molaire, pH 7,4, et le filtre pour lier les sondes contient des résidus d'avidine modiflée capables de libérer de la biotine fixée dans des conditions moyennement acides.

21. Kit pour mettre en oeuvre le procédé de la revendication 10, le kit comprenant une partie jetable (b) d'un dispositif selon la revendication 1, et des réactifs de lyse, de lavage et d'élution qui peuvent être nécessaires pour mettre en oeuvre le procédé de purification d'acide nucléique.
